Europäisches Patentamt

European Patent Office

Office européen des brevets

(19)

(11) Veröffentlichungsnummer : **0 405 114 B1**

## (12) EUROPÄISCHE PATENTSCHRIFT

(45) Veröffentlichungstag der Patentschrift :
20.10.93 Patentblatt 93/42

(51) Int. Cl.⁵ : **B60T 8/00**

(21) Anmeldenummer : **90109184.3**

(22) Anmeldetag : **16.05.90**

(54) **Druckmittelbetätigbare Bremsanlage für mehrachsige Kraftfahrzeuge.**

(30) Priorität : **29.06.89 DE 3921309**

(43) Veröffentlichungstag der Anmeldung :
**02.01.91 Patentblatt 91/01**

(45) Bekanntmachung des Hinweises auf die
Patenterteilung :
**20.10.93 Patentblatt 93/42**

(84) Benannte Vertragsstaaten :
**DE FR GB SE**

(56) Entgegenhaltungen :
**EP-A- 0 246 790**
**EP-A- 0 288 846**
**DE-A- 2 622 746**

(73) Patentinhaber : **ROBERT BOSCH GMBH**
**Postfach 30 02 20**
**D-70442 Stuttgart (DE)**

(72) Erfinder : **Müller, Egbert, Dr.-Ing.**
**Schillerstrasse 24**
**D-7147 Eberdingen (DE)**
Erfinder : **Stumpe, Werner, Dipl.-Ing.**
**Ferdinand-Hanauer-Strasse 62**
**D-7000 Stuttgart 50 (DE)**
Erfinder : **Schlichenmaier, Andreas,**
**Dipl.-Ing.(FH)**
**Zaberfelderstrasse 29/1**
**D-7129 Zaberfeld-Leonbronn (DE)**

EP 0 405 114 B1

EP 0 405 114 B1

## Beschreibung

### Stand der Technik

Die Erfindung geht aus von einer druckmittelbetätigbaren Bremsanlage für mehrachsige Kraftfahrzeuge, insbesondere Nutzfahrzeuge, nach der Gattung des Hauptanspruchs.

Es ist schon eine derartige Bremsanlage eines luftgefederten Fahrzeugs aus der DE-OS 26 22 746 bekannt, bei dem zur Messung der Achslast Drucksensoren vorgesehen sind, mit denen der lastabhängige Druck in den Federbälgen des Fahrzeugs gemessen und in einer elektronischen Steuereinrichtung ausgewertet wird. Außerdem ist die bekannte Bremsanlage mit einer Blockierschutzeinrichtung ausgestattet, welche den Radbremsen zugeordnete Drucksteuerventile aufweist. Die Steuereinrichtung wirkt in Abhängigkeit von der Belastung der Fahrzeugachsen auf die Drucksteuerventile in dem Sinne ein, daß mit abnehmender Hinterachslast der Radbremsdruck der Hinterachse verringert wird. Diese lastabhängige Bremsfunktion kann bei Nutzfahrzeugen durch folgende Formel beschrieben werden:

$$p_{achs} = (p_{bbv} - p_{null}) \times k + p_{null}$$

Darin bedeutet:

$P_{achs}$ = Bremsdruck an der Achse,

$P_{bbv}$ = Bremsdruck am Betriebsbremsventil, vom Fahrer gewünscht,

$P_{null}$ = Druck zum Anlegen der Radbremsen (bei Nutzfahrzeugen im statistischen Mittel 0,4 bar),

$k$ = achslastabhängiger Reduzierfaktor.

Derartige Fahrzeuge, welche eine Bremsanlage mit einer Blockierschutzeinrichtung und einer lastabhängigen Bremsdruckzumessung aufweisen, sind relativ bremsstabil. Jedoch sind die Sensoren zur Erfassung der Achslast teuer und die Ausgestaltung der Steuereinrichtung für die achslastabhängige Bremsdruckzumessung aufwendig.

### Vorteile der Erfindung

Die erfindungsgemäße Bremsanlage mit den kennzeichnenden Merkmalen des Hauptanspruchs hat demgegenüber den Vorteil, daß die Bremsanlage einfacher gestaltet werden kann als beim bekannten Entwicklungsstand. Zur achsweisen lastabhängigen Bremsdruckzumessung werden vielmehr durch die Steuereinrichtung der Bremsanlage Informationen ausgewertet, welche beim Bremsbetrieb insbesondere bei der Blockierschutz-Ansteuerung wenigstens eines Drucksteuerventils auftreten. Sensoren für die Ermittlung der Achslast sind daher entbehrlich. Trotz des verminderten Aufwandes für die Bremsausstattung des Fahrzeugs wird dennoch ein Bremsverhalten erzielt, welches ein lastabhängiges Blockieren der Radbremsen weitgehend vermeidet, den Fahrkomfort im wesentlichen unbeeinflußt läßt und die Bremsstabilität des Fahrzeugs erhält.

Durch die in den Unteransprüchen 2 bis 5 aufgeführten Maßnahmen sind vorteilhafte Weiterbildungen und Verbesserungen der im Hauptanspruch angegebenen Bremsanlage möglich, zu denen bei der Beschreibung des Ausführungsbeispiels Stellung genommen ist.

### Zeichnung

Ein Ausführungsbeispiel der Erfindung ist in der Zeichnung vereinfacht dargestellt und in der nachfolgenden Beschreibung näher erläutert. Es zeigen

Figur 1 ein Blockschaltbild einer elektro-pneumatischen Bremsanlage eines Kraftfahrzeugs,

Figur 2 ein Diagramm über die Bemessung und Zuordnung des Reduzierfaktors k zu den Fahrzeugachsen,

Figur 3 ein Diagramm des Verlaufs der Geschwindigkeit und des Bremsdrucks an einer Fahrzeugachse in Abhängigkeit von der Bremsdauer,

Figur 4 ein Diagramm des Verlaufs des Reduzierfaktors k in Abhängigkeit vom Blockierneigungsdruck,

Figuren 5a und b Diagramme des Verlaufs der Geschwindigkeit und des Bremsdrucks an einem Fahrzeugrad in Abhängigkeit von der Bremsdauer auf unterschiedlichen Fahrbahnen,

Figur 6 ein Diagramm des Verlaufs der Fahrzeugverzögerung in Abhängigkeit vom Blockierneigungsdruck und der Achslast des Fahrzeugs,

Figur 7 ein Diagramm des Verlaufs des Reduzierfaktors k in Abhängigkeit von der Beladung,

Figur 8 ein Diagramm des Verlaufs des Bremsdrucks in Abhängigkeit von der Zeit,

Figur 9 ein Diagramm der lastabhängigen Zuordnung der Reduzierfaktoren k zu den Fahrzeugachsen,

Figur 10 ein Diagramm der bremsvorgangsabhängig angepaßten Zuordnung der Reduzierfaktoren k zu den Fahrzeugachsen.

2

Beschreibung des Ausführungsbeispiels

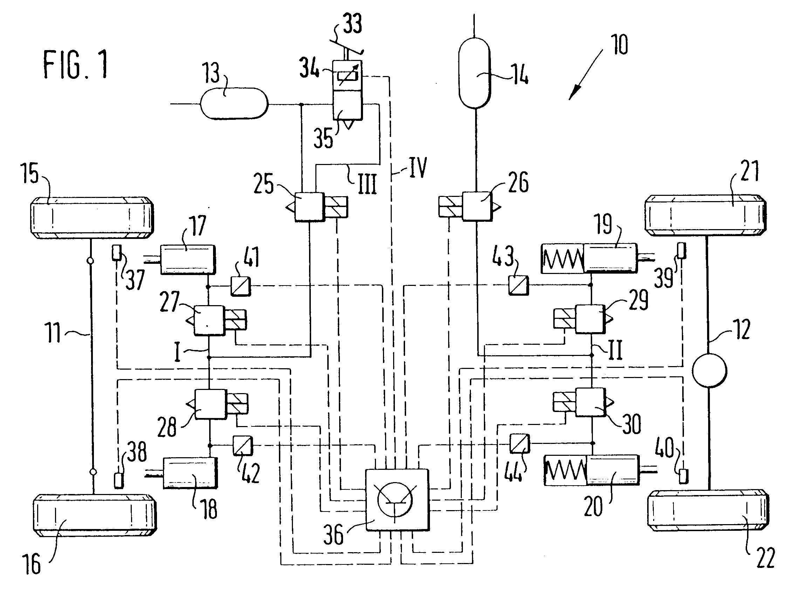

Die in Figur 1 schematisch dargestellte, druckmittelbetätigbare Bremsanlage 10 für ein mehrachsiges Kraftfahrzeug, z. B. einen Lastkraftwagen, weist einen der Vorderachse 11 des Fahrzeugs zugeordneten Druckmittelbremskeis I und einen der Hinterachse 12 zugeordneten Druckmittelbremskreis II auf. Jedem Bremskreis I bzw. II ist ein von einem nicht dargestellten Kompressor mit Druckluft auf Betriebsdruck aufgeladener Druckluftspeicher 13 bzw. 14 zugeordnet. Der Speicher 13 versorgt zwei den Rädern 15 und 16 der Vorderachse 11 zugeordnete Bremszylinder 17 und 18 mit Druckluft. Mit dem Druckluftspeicher 14 sind zwei Radbremszylinder 19 und 20 verbunden, welche mit den Rädern 21 und 22 der Hinterachse 12 zusammenwirken.

Jeder Druckmittelbremskreis I bzw. II hat ein den Bremsdruck in den Radbremszylindern 17 bis 20 steuerndes Drucksteuerhauptventil 25 bzw. 26. Außerdem ist jedem Radbremszylinder 17 bis 20 im entsprechenden Druckmittelbremskreis I und II je ein Drucksteuerventil 27 bis 30 zum Druckaufbau, Druckhalten oder Druckabbau des im entsprechenden Radbremszylinder wirkenden Bremsdruckes zugeordnet.

Die Bremsanlage 10 des Fahrzeugs ist durch ein Bremspedal 33 betätigbar. Dieses wirkt sowohl auf einen elektrischen Bremswertgeber 34 als auch auf einen aus Sicherheitsgründen vorgesehenen pneumatischen Bremswertgeber 35 ein. Dieser arbeitet über einen pneumatischen Rückhaltkreis III mit dem Drucksteuerhauptventil 25 zusammen. Der elektrische Bremswertgeber 34 ist an einen elektrischen Steuerkreis IV mit einer elektronischen Steuereinrichtung 36 angeschlossen. Diese steht sowohl mit den Drucksteuerhauptventilen 25 und 26 als auch mit den Drucksteuerventilen 27 bis 30 der beiden Bremskreise I und II in Verbindung. An die Steuereinrichtung 36 sind außerdem den Rädern 15 und 16 der Vorderachse 11 und den Rädern 21 und 22 der Hinterachse 12 zugeordnete Drehzahlfühler 37 bis 40 angeschlossen. Ferner sind mit der Steuereinrichtung 36 den Radbremszylindern 17 bis 20 der beiden Fahrzeugachsen 11 und 12 zugeordnete Drucksensoren 41 bis 44 verbunden, welche den Radbremsdruck in ein entsprechendes elektrisches Signal umwandeln.

Die Steuereinrichtung 36 bemißt, abhängig vom Fahrerwunsch, mittels der Drucksteuerhauptventile 25 und 26 und Teilen der Drucksteuerventile 27 bis 30 den Bremsdruck in den Radbremszylindern 17 bis 20. Außerdem schaltet die Steuereinrichtung 36 die Drucksteuerventile 27 bis 30 und Teile der Drucksteuerhauptventile 25, 26 zum Zwecke des Blockierschutzes, wenn aus den Signalen der Drehzahlfühler 37 bis 40 eine Blockierneigung der Fahrzeugräder 15, 16, 21, 22 erkannt wird.

Die elektronische Steuereinrichtung 36 erfaßt bzw. berechnet nach Inbetriebnahme des Kraftfahrzeugs kontinuierlich aus den ihr zugeführten elektrischen Signalen die Rad- bzw. Fahrzeuggeschwindigkeit, die Beschleunigung bzw. Verzögerung der Räder 15, 16, 21, 22 bzw. des Fahrzeugs sowie den Schlupf der Räder. Außerdem nimmt die Steuereinrichtung 36 die vom Fahrer des Kraftfahrzeugs vorgegebenen Bremswerte und die in den Radbremszylindern 17 bis 20 wirkenden Bremsdrücke auf. Die Steuereinrichtung 36 wirkt in Abhängigkeit vom Raddrehverhalten zum Zwecke des Blockierschutzes auf die Druckmittelbremskreise I und II ein. Darüber hinaus kann mit der Steuereinrichtung 36 entsprechend der Beladung des Kraftfahrzeugs Einfluß auf die achsweise Bremsdruckzumessung genommen werden. Diese kann wie folgt bewirkt werden:

Wie erwähnt, bemißt sich bei Nutzfahrzeugen der lastabhängige Bremsdruck nach der eingangs zitierten Formel, wobei der Anlegedruck der Bremsen bei einer Bremsanlage im statistischen Mittel 0,4 bar beträgt. Da bei einer derartigen Bremsanlage anstelle eines einen Bremsdruck $p_{bbv}$ abgebenden Betriebsbremsventils ein Bremswertgeber 34 Verwendung findet, welcher bei einer Bremsung ein elektrisches Signal erzeugt, wird dieses Signal in der Steuereinrichtung 36 nach einem Verknüpfungsgesetz in einen Rechenwert umberechnet, der diesem Bremsdruck $p_{bbv}$ entspricht. Außerdem wird mit dem Einschalten der Bremsanlage 10, z. B. mittels eines Fahrtschalters, in der Steuereinrichtung 36 ein Reduzierfaktor k initialisiert, welcher aus Versuchen ermittelt ist und beispielsweise den Wert 0,8 hat. Anhand dieser Größen $p_{bbv}$, $p_{null}$ und k wird in der Steuereinrichtung 36 der Bremsdruck $p_{achs}$ errechnet, welcher mittels der Drucksteuerhauptventile 25 und 26 und Teilen der Drucksteuerventile 27 bis 30 in die Radbremszylinder 17 bis 20 eingesteuert wird und die vom Fahrer gewünschte Verzögerung des Fahrzeugs bewirkt.

Die Steuereinrichtung 36 verändert den Reduzierfaktor k, wenn es während einer Bremsung zu einer Aktivierung der Blockierschutzfunktion kommt, d. h. wenn die Steuereinrichtung 36 aufgrund des Raddrehverhaltens eine Blockierneigung erkennt und Signale zur Blockierschutz-Ansteuerung wenigstens eines der Drucksteuerventile 27 bis 30 aussendet.

Der z. B. an der Hinterachse 12 wirksame Reduzierfaktor k wird verkleinert, wenn an der Hinterachse, deren Bremsdruckzumessung lastabhängig sein soll, eine Aktivierung der Blockierschutzfunktion auftritt, während die Räder 15, 16 der Vorderachse 11 ein stabiles Raddrehverhalten zeigen.

Der an der Hinterachse 12 wirksame Reduzierfaktor k wird dagegen bei der Bremsdruckzumessung für die Hinterachse vergrößert, wenn an der Vorderachse 11 die Blockierschutzfunktion aktiviert wird, nicht dagegen an der Hinterachse. Hierdurch erfolgt eine Anhebung des Bremsdruckes an der Hinterachse 12.

EP 0 405 114 B1

Bei dieser achsweisen Bremsdruckzumessung in Abhängigkeit von der Aktivierung der Blockierschutzfunktion wird der Tatsache Rechnung getragen, daß eine geringer belastete Fahrzeugachse beim Bremsen eher zum Blockieren neigt als eine belastete Achse.

Darüber hinaus wird der Reduzierfaktor k erhöht, wenn an der oder den Fahrzeugachsen, an denen eine lastabhängige Bremsdruckzumessung wirksam sein soll, bei einer vom Fahrer gewollten großen Verzögerung keine Blockierschutzfunktion aktiviert wird.

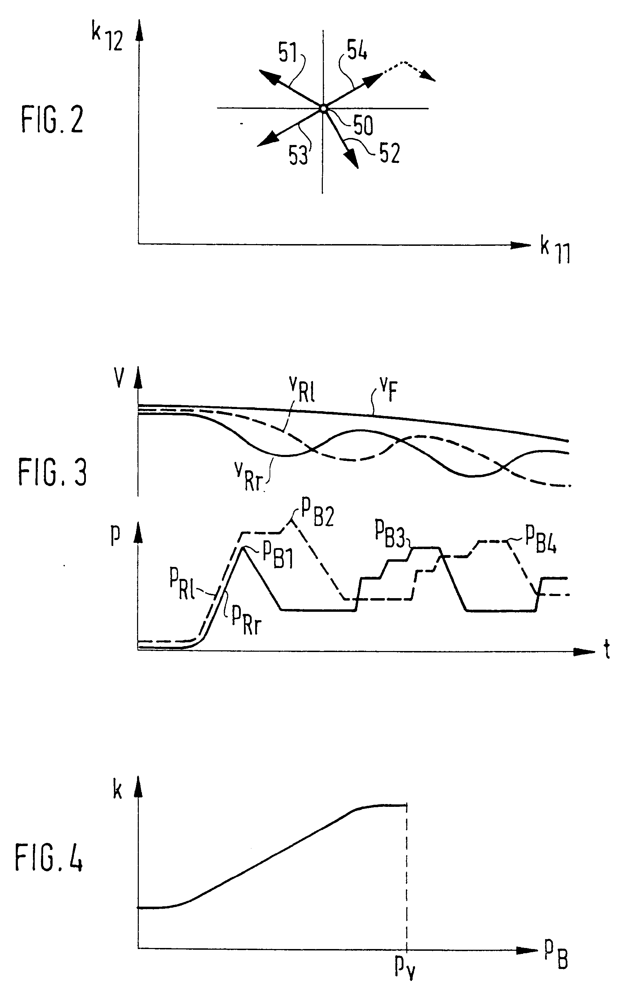

Bei einem Fahrzeug nach Figur 1, dessen beide Achsen 11 und 12 lastabhängig bremsdruckgesteuert sein sollen, ist in Figur 2 die relative Größe und die Veränderung des der Vorderachse 11 bzw. der Hinterachse 12 zugeordneten Reduzierfaktors $k_{11}$ bzw. $k_{12}$ bei den jeweiligen Bremszuständen der Tendenz nach aufgezeigt. Zum Beispiel werden beim Einschalten der Bremsanlage 10 mittels eines Fahrtschalters Bremsfaktoren $k_{11}$ und $k_{12}$ initialisiert, deren gegenseitige Zuordnung und Größe in Punkt 50 des Diagramms angegeben ist. Dabei ist der Reduzierfaktor $k_{11}$ für die Vorderachse 11 aus bremsphysikalischen Gründen größer als der Reduzier-faktor $k_{12}$ der Hinterachse 12.

Wird im Bremsbetrieb die Blockierschutzfunktion an der Vorderachse 11, nicht aber an der Hinterachse 12 aktiv, verändern sich die Reduzierfaktoren in Richtung des Pfeiles 51. Im umgekehrten Fall (Blockierschutzfunktion an der Hinterachse 12, Vorderachse 11 bremsstabil) erfolgt eine Änderung der Reduzierfaktoren in Richtung des Pfeiles 52. Wird die Blockierschutzfunktion sowohl an der Vorderachse 11 als auch an der Hinterachse 12 wirksam, verändern sich die Reduzierfaktoren $k_{11}$ und $k_{12}$ in Richtung des Pfeiles 53. Bei einer gewünschten großen Verzögerung des Fahrzeugs folgen die Reduzierfaktoren $k_{11}$ und $k_{12}$ dem ausgezogen gezeichneten Pfeil 54, wenn keine Blockierschutzfunktion auftritt. Wird dann jedoch, z. B. an der Hinterachse 12, die Blockierschutzfunktion wirksam, so verändern sich die Reduzierfaktoren $k_{11}$ und $k_{12}$ wie gepunktet an-gedeutet.

Einfluß auf die lastabhängige Bremsdruckzumessung, z. B. der Vorderachse 11 des Fahrzeugs, kann auch dadurch genommen werden, daß der Bremsdruck, der ein Blockieren des Rades 21 und/oder des Rades 22 der Hinterachse 12 hervorruft, mittels der Drucksensoren 43, 44 erfaßt und zur Berechnung des Reduzierfaktors k für den Vorderachsbrems- druck benutzt wird. Dies soll anhand von Figur 3 verdeutlicht werden:

Dort ist ein Bremsvorgang an der Hinterachse 12 des Fahrzeugs über der Zeit t dargestellt, wobei einerseits der Verlauf der Fahrzeuggeschwindigkeit $v_F$, der Geschwindigkeit $V_{Rr}$ des rechten Rades 21, der Geschwindigkeit $v_{Rl}$ des linken Rades 22 und andererseits der Verlauf des Bremsdruckes $p_{Rr}$ am rechten Hinterachs-Radbremszylinder 19 sowie der Verlauf des Bremsdrucks $p_{Rl}$ des linken Radbremszylinders 20 mit dabei auftretender Blockierschutzfunktion angegeben ist. Diese Blockierschutzfunktion wird aktiviert, weil die Steuereinrichtung 36 beim Bremsvorgang erkennt, daß die Geschwindigkeit $v_{Rr}$ des Rades 21 beim eingesteuerten Bremsdruck $p_{Rr}$ stark abnimmt und Blockiergefahr für das Rad besteht. Die eine Blockiergefahr des Fahrzeugrades 21 oder beider Räder 21 und 22 hervorrufenden Bremsdrücke $p_{B1}$, $p_{B2}$, $p_{B3}$ und $p_{B4}$ werden von der Steuereinrichtung 36 erfaßt und zur Berechnung des Reduzierfaktors k für die Bremsdruckzumessung an der Vorderachse 11 benutzt. Dabei kann die Steuereinrichtung 36 bereits bei Anteilen dieser Drücke den Reduzierfaktor k bestimmen, also bei Drücken, welche schon eine Blockierneigung hervorrufen.

Der beispielhafte Verlauf des Reduzierfaktors k in Abhängigkeit vom eine Blockiergefahr hervorrufenden Druck $p_B$ ist in Figur 4 angegeben. Dabei ist $p_v$ als der im Druckluftspeicher 14 vom Luftvorrat vorgegebene Vorratsdruck angedeutet. Zur Berechnung des Reduzierfaktors k kann die Bremsdruckhöhe nur eines Rades der Achse mit Blockierschutzfunktion oder der Druckhöhe beider Räder dieser Achse herangezogen werden. Dabei kann der Mittelwert beider Drücke benutzt werden oder eine Gewichtung der Drücke erfolgen.

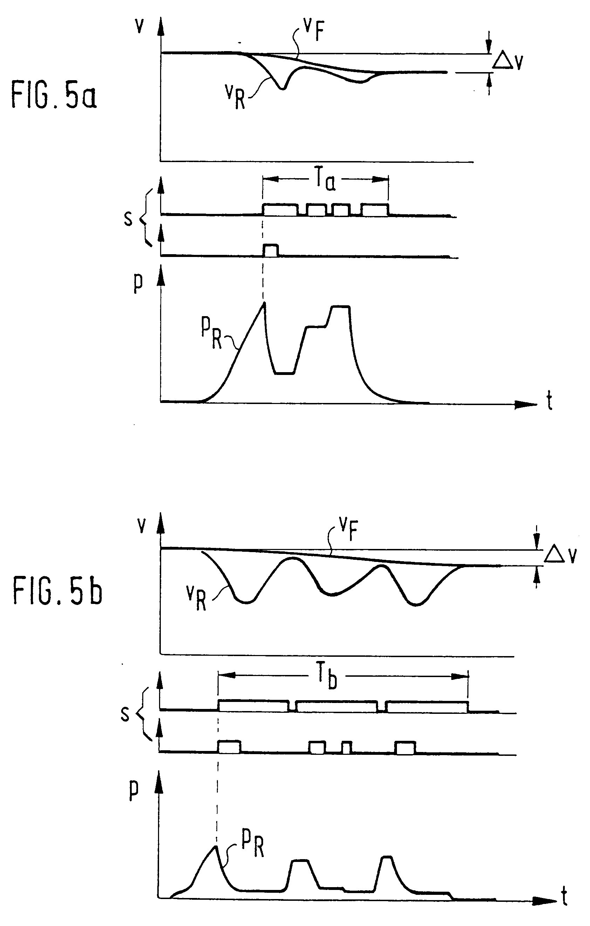

Eine weitere Möglichkeit, den Bremsdruck lastabhängig zuzumessen, ist auf folgende Weise gegeben und anhand der Figuren 5a und 5b erläutert:

Figur 5a gibt die Fahrzeuggeschwindigkeit $v_F$, die Radgeschwindigkeit $v_R$ und den Bremsdruck $p_R$ einer Bremsung mit Blockierschutzfunktion auf nasser Fahrbahn über der Zeit t wieder. Figur 5b stellt eine Bremsung auf vereister Fahrbahn dar. Bei beiden Bremsungen des gleichen Fahrzeugs mit einer bestimmten Beladung wird von einem bestimmten Geschwindigkeitsniveau ausgehend die gleiche Geschwindigkeitsabsenkung $\Delta v$ erzielt. Eine bestimmte Achsbelastung ergibt auf verschiedenen Fahrbahnzuständen unterschiedliche Blockierdrücke (siehe den Verlauf von über der Zeit t in Figur 5a und 5b). Ebenso ist die Dauer $T_a$ und $T_b$ der Aktivierung der Blockierschutzfunktion, während der die Steuereinrichtung 36 Signale S zur Ansteuerung wenigstens eines der Drucksteuerventile 27 bis 30 aussendet, bei beiden Bremsungen unterschiedlich. Es ergeben sich also bei beiden Bremsungen unterschiedliche mittlere Verzögerungen a. Diese Verzögerung a ist proportional zum Blockierdruck $p_R$ und umgekehrt proportional zur beladungsabhängigen Achslast des Fahr-zeugs sowie der Aktivierungsdauer $T_a$ bzw. $T_b$ der Blockierschutzfunktion.

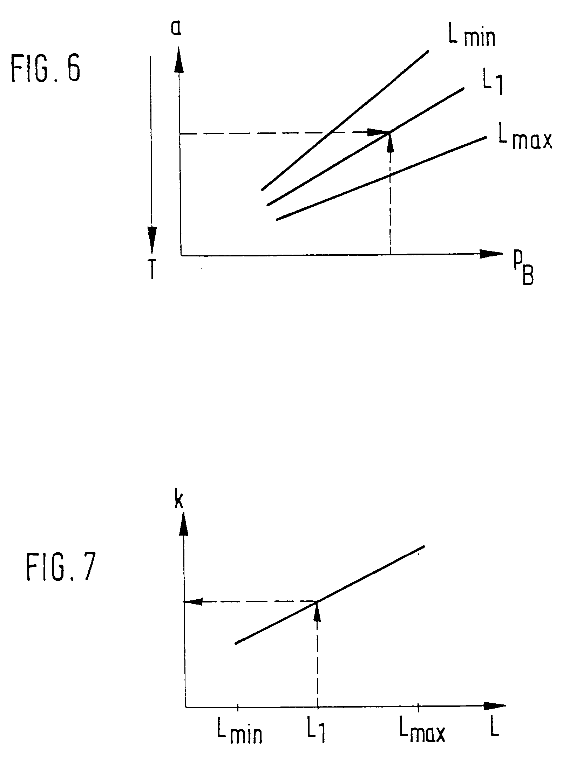

Wie das Diagramm gemäß Figur 6 zeigt, ist dort in der Abszisse der Blockierdruck $p_B$, in der Ordinate die Aktivierungsdauer T der Blockierschutzfunktion und die Verzögerung a des Fahrzeugs aufgetragen, während die Kurvenschar verschiedene Achslasten L des Fahrzeugs wiedergibt. Dabei bedeutet $L_{min}$ eine kleine und

4

$L_{max}$ eine große Achslast. Es kann daher mit Hilfe der Steuereinrichtung 36 aus dort erfaßten Daten über Blockierdruck $p_B$ und Aktivierungsdauer T der Blockierschutzfunktion in Verbindung mit in einem Rechner der Steuereinrichtung gespeicherten Fahrzeugdaten, wie Leer- und Ladegewicht, auf das vorhandene Fahrzeuggewicht und damit auf die tatsächliche Achslast $L_1$ geschlossen werden, wie dies in Figur 6 mit gestrichelten Linien angedeutet ist. Hieraus kann in der Steuereinrichtung 36 nach der in Figur 7 angegebenen Zuordnung von Achslast L und Reduzierfaktor k der zur lastabhängigen Bremsdruckzumessung erforderliche Faktor ermittelt werden.

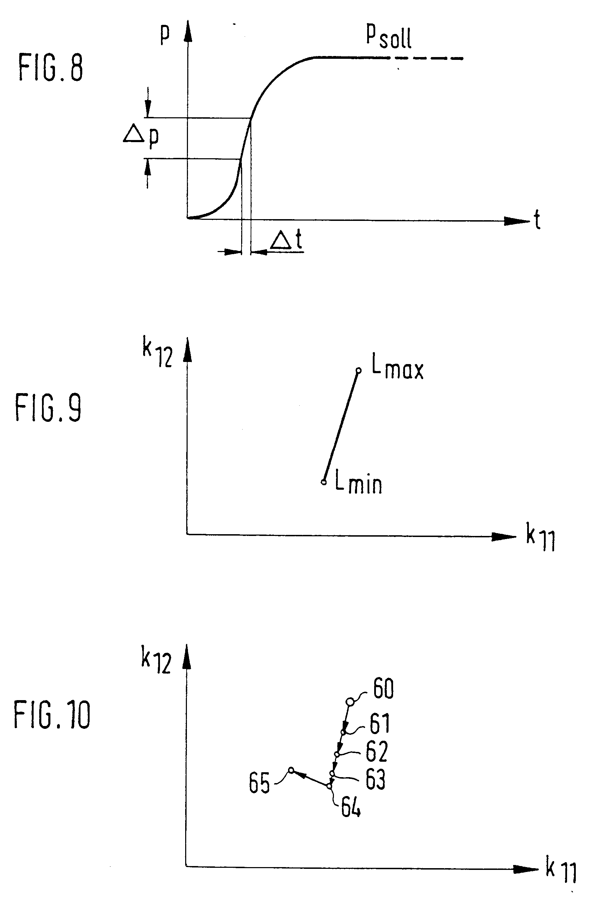

Eine von der Aktivierung der Blockierschutzfunktion abhängige Steuerung des Bremsdruckes an einer lastabhängig steuerbaren Fahrzeugachse kann auch dann realisiert werden, wenn eine große Verzögerung des Fahrzeugs, z. B. bei einer Schnellbremsung, verlangt wird. Derartige Bremsungen sind meistens auch Notbremsungen, bei denen alle verfügbare Bremskraft erzeugt werden soll. In Figur 8 ist der Verlauf des Bremsdruckes $p_{soll}$ über der Zeit t bei einer derartigen Bremsung dargestellt. Zur Errechnung der Größe des Reduzierfaktors kann die von der Steuereinrichtung 36 des Fahrzeugs erfaßte zeitliche Steigerung des vom Fahrer gewünschten Bremsdrucks $p_{soll}$, also der Gradient p der Bremsbetätigung, herangezogen werden. Solange bei der Bremsbetätigung eine Aktivierung der Blockierschutzfunktion unterbleibt, wird bei schneller Drucksteigerung der Reduzierfaktor vergrößert. Das Ausmaß der Vergrößerung des Faktors ist vom Gradienten $\dot{p} = \Delta p : \Delta t$ abhängig. Der Reduzierfaktor k (oder die Reduzierfaktoren bei mehreren lastabhängig steuerbaren Fahrzeugachsen) kann entweder stetig oder in Stufen nach bestimmten Schwellenwerten, z. B. abhängig vom Absolutwert des Bremsdrucks $p_{soll}$, verändert werden. Dabei kann die Änderung des Reduzierfaktors k um eine feste Größe oder um einen prozentualen Anteil erfolgen, z. B. in Abhängigkeit vom im Zusammenhang mit einer vorausgegangenen Bremsung von der Steuereinrichtung 36 eingestellten Reduzierfaktor.

Außerdem ist es auf folgende Weise möglich, einen lastabhängigen Radbremssolldruck an einer Achse oder mehreren Achsen eines Fahrzeugs zu erzielen:

Wie vorausgehend erwähnt, ist die Verzögerung des Fahrzeugs vom Radbremszylinderdruck und der Fahrzeugbeladung abhängig. Bei unbekannter Fahrzeugmasse kann deshalb mit der Steuereinrichtung 36 aus dem erfaßten Druck und der berechenbaren Verzögerung in Verbindung mit konstruktiv vorgegebenen, gespeicherten Fahrzeugdaten, wie Leergewicht und maximaler Zuladung, die jeweilige Fahrzeugmasse ermittelt werden. So sei für einen bestimmten Beladungszustand des Fahrzeugs die Zuordnung von Fahrzeugmasse, Bremsdruck und Verzögerung bekannt und in der Steuereinrichtung 36 gespeichert. Wird nun für das teilbeladene oder leere Fahrzeug der Istbremsdruck verändert, so daß sich eine gleiche Verzögerung ergibt, wie sie beim Sollbremsdruck für das beladene Fahrzeug vorliegt, so ist mit Hilfe eines in der Steuereinrichtung 36 vorhandenen elektronischen Rechengeräts ein Schluß auf die vorliegende tatsächliche Fahrzeugmasse bzw. Achslast L möglich. Die Steuereinrichtung 36 kann entsprechend dem in Figur 9 dargestellten Diagramm, in dem $L_{min}$ für minimale Achslast bei leerem Fahrzeug, $L_{max}$ für maximale Achslast bei beladenem Fahrzeug steht, die lastabhängige Verteilung der den beiden Achsen 11 und 12 zugeordneten Reduzierfaktoren $k_{11}$ und $k_{12}$ zur lastabhängigen Bremssolldruckzumessung vornehmen. Die in Figur 9 wiedergegebene Verteilung der Faktoren $k_{11}$ und $k_{12}$ kann nach einem vorgegebenen, durch Versuche ermittelten oder nach einem statistischen, für mehrere Fahrzeugtypen gültigen Schlüssel erfolgen. Diese Bremsdruckverteilung nach Figur 9 kann ausgeführt werden, solange keine Blockiergefahr der Fahrzeugräder besteht.

Die lastabhängige Bremsdruckzumessung kann nach einer vorstehend beschriebenen Maßnahmen oder auch in Kombination dieser Maßnahmen erfolgen. So kann nach Fahrtantritt die Steuereinrichtung 36 Reduzierfaktoren $k_{11}$ und $k_{12}$ für die achslastabhängige Bremsdruckzumessung vorgeben, wie sie in Figur 10 im Punkt 60 angegeben sind. Im Verlauf einiger Bremsungen ohne Aktivierung der Blockierschutzfunktion korrigiert die Steuereinrichtung 36 die Faktoren beispielsweise über die Punkte 61, 62, 63 und 64 im Sinne der im Zusammenhang mit Figur 9 beschriebenen Maßnahme. Stellt die Steuereinrichtung 36 keine Notwendigkeit für weitere Korrekturen fest, da die Reduzierfaktoren eine Bremsdruckzumessung vorgeben, welche der tatsächlichen Fahrzeugbeladung gerecht wird, so bleiben diese Werte gespeichert und dienen als Leitwert für künftige Bremsungen, bis der Fahrtschalter auf "aus" gestellt wird oder zumindest solange keine andere Korrekturmaßnahme erforderlich ist. Wird bei einer stärkeren Bremsung die Blockierschutzfunktion z. B. an der Vorderachse 11 des Fahrzeugs aktiv, verändert die Steuereinrichtung 36 die Reduzierfaktoren im Sinne der Maßnahme gemäß Figur 2, d. h. die Faktoren nehmen im Diagramm nach Figur 10 die Position 65 ein. Diese neue Wert bleibt nun in der Steuereinrichtung 36 gespeichert und kommt bei künftigen Bremsungen zur Anwendung. Durch die fortlaufenden Anpassungen der Reduzierfaktoren $k_{11}$ und $k_{12}$ ergibt sich aus mehreren Bremsungen eine Bremsdruckverteilung wie bei einer direkten Messung der Achslasten. Dabei kann die Bremsdruckanpassung nur an einer Fahrzeugachse oder, wie beim Ausführungsbeispiel nach Figur 1, an beiden Achsen 11 und 12 oder an weiteren Achsen eines Fahrzeugs mit größerer Achszahl erfolgen.

## Patentansprüche

1. Druckmittelbetätigbare Bremsanlage (10) für mehrachsige Kraftfahrzeuge, insbesondere Nutzfahrzeuge, mit mindestens einem elektrischen Steuerkreis (IV), der in Druckmittelbremskreisen (I, II) für Radbremszylinder (17 bis 20) liegende Drucksteuerventile (27 bis 30) und mindestens eine Steuereinrichtung (36) aufweist, welche die Drucksteuerventile in Abhängigkeit vom fahrergewünschten Bremsdruck sowie vom Raddrehverhalten zum Zwecke des Blockierschutzes und zur achsweisen lastabhängigen Bremsdruckzumessung steuert, dadurch gekennzeichnet, daß der Radbremsdruck an wenigstens einer lastabhängig steuerbaren Fahrzeugachse (z.B. 12) in Abhängigkeit von der Blockierschutz-Ansteuerung wenigstens eines Drucksteuerventils (27 bis 30) an dieser Fahrzeugachse (12) und/oder weiterer Fahrzeugachsen (z.B. 11) durch mit der Steuereinrichtung (36) berechnete Korrekturfaktoren in dem Sinne veränderbar ist, daß bei auf Blockierschutz-Ansteuerung wenigstens eines Drucksteuerventils (27 bis 30) an der lastabhängig steuerbaren Fahrzeugachse (12) folgenden Bremsungen der Bremsdruck an dieser Fahrzeugachse (12) verkleinert, bei auf Blockierschutz-Ansteuerung wenigstens eines Drucksteuerventils (27 bis 30) an einer anderen Fahrzeugachse (11) folgenden Bremsungen dagegen an der lastabhängig steuerbaren Fahrzeugachse (12) vergrößert wird, und daß der Radbremsdruck an der lastabhängig steuerbaren Fahrzeugachse (z.B. 12) über die lastabhängige Bemessung hinaus vergrößert wird, wenn die zeitliche Steigung (Gradient) des vom Fahrer gewünschten Bremsdrucks größer als ein bestimmter Schwellwert ist und eine Blockierschutz-Ansteuerung wenigstens eines Drucksteuerventils (27 bis 30) an den Fahrzeugachsen (11, 12) unterbleibt.

2. Bremsanlage nach Anspruch 1, dadurch gekennzeichnet, daß der Radbremsdruck an einer lastabhängig steuerbaren Fahrzeugachse (z.B. 12) in Abhängigkeit von der eine Blockierneigung wenigstens eines Rades (z.B. 21) einer Fahrzeugachse (z.B. 12) hervorrufenden Bremsdruckhöhe ($P_{R1}$) veränderbar ist.

3. Bremsanlage nach Anspruch 1, dadurch gekennzeichnet, daß der Radbremsdruck an einer lastabhängig steuerbaren Fahrzeugachse (z. B. 12) in Abhängigkeit von der Dauer ($T_a$, $T_b$) eines Blockierschutzfunktionszyklusses an wenigstens einem Rad einer Fahrzeugachse sowie in Abhängigkeit von der eine Blockierneigung dieses Rades hervorrufenden Bremsdruckhöhe ($P_R$) veränderbar ist.

4. Bremsanlage nach Anspruch 1, dadurch gekennzeichnet, daß der Radbremsdruck an einer lastabhängig steuerbaren Fahrzeugachse (z. B. 12) in Abhängigkeit von der zeitlichen Steigerung des Bremsdruckes (p) veränderbar ist, und zwar mit schneller zunehmender Drucksteigerung vergrößert wird.

5. Bremsanlage nach wenigstens einem der Ansprüche 1 bis 4, dadurch gekennzeichnet, daß bei aufeinanderfolgenden Bremsungen der jeweils erreichte, im Bedarfsfall auch blockierüberwachte, maximale Bremsdruck in der Steuereinrichtung (36) gespeichert wird, daß ferner ein den Achslasten des Fahrzeugs entsprechender Bremsdruckwert aus den gespeicherten Werten in einem elektronischen Rechengerät der Steuereinrichtungen (36) ermittelt wird und daß dieser Wert für weitere Bremsungen als Bremsdruck-Leitwert verwendbar ist.

## Claims

1. Brake system (10), which can be actuated by pressure medium, for multi-axle motor vehicles, in particular commercial vehicles, having at least one electrical control circuit (IV) which has pressure control valves (27 to 30) located in pressure medium brake circuits (I, II) for wheel brake cylinders (17 to 20) and at least one control device (36), which controls the pressure control valves as a function of the brake pressure desired by the driver and of wheel rotational behaviour for the purpose of anti-lock protection and brake pressure metering to particular axles as a function of load, characterised in that the wheel brake pressure on at least one vehicle axle (for example 12) which can be controlled as a function of load can be changed by correction factors calculated by the control device (36) as a function of the anti-lock protection activation of at least one pressure control valve (27 to 30) on this vehicle axle (12) and/or further vehicle axles (for example 11) in a direction such that, in the case of braking actions following anti-lock protection activation of at least one pressure control valve (27 to 30) on the vehicle axle (12) which can be controlled as a function of load, the brake pressure at this vehicle axle (12) is reduced, in the case of braking actions following anti-lock protection activation of at least one pressure control valve (27 to 30) on another vehicle axle (11), on the other hand, the brake pressure on the vehicle axle (12) which can be controlled as a function of load is increased, and in that the wheel brake pressure on the vehicle axle (for example 12) which can be controlled as a function of load is increased beyond the load-dependent amount if the gradient with time of the brake pressure desired by the driver is greater than a certain threshold value and an anti-lock protection activation of at least one pressure control valve (27 to 30) on the vehicle axles (11, 12) does not occur.

2. Brake system according to Claim 1, characterised in that the wheel brake pressure on a vehicle axle (for example 12) which can be controlled as a function of load can be changed as a function of the brake pressure level ($P_{R1}$) causing a tendency to locking of at least one wheel (for example 21) of a vehicle axle (for example 12).

3. Brake system according to Claim 1, characterised in that the wheel brake pressure on a vehicle axle (for example 12) which can be controlled as a function of load can be changed as a function of the duration ($T_a$, $T_b$) of an anti-lock protection functional cycle on at least one wheel of a vehicle axle and as a function of the brake pressure level ($P_R$) causing a tendency to locking of this wheel.

4. Brake system according to Claim 1, characterised in that the wheel brake pressure on a vehicle axle (for example 12) which can be controlled as a function of load can be changed as a function of the rise with time of the brake pressure (p) and, specifically, is increased with rapidly increasing pressure rise.

5. Brake system according to at least one of Claims 1 to 4, characterised in that in the case of braking actions following one another, the respective maximum brake pressure reached, if required monitored by the anti-lock protection system, is stored in the control device (36), in that, furthermore, a brake pressure value corresponding to the axle loads of the vehicle is determined, in an electronic computational unit of the control devices (36), from the stored values and in that this value can be used as a brake pressure guide value for further braking actions.

## Revendications

1. Installation de freinage (10) pouvant être actionnée par un fluide sous pression pour des véhicules à moteur à plusieurs essieux, en particulier pour des véhicules utilitaires, avec au moins un circuit de commande électrique (IV), qui présente des soupapes de commande de pression (27 à 30) se trouvant dans des circuits de freinage de fluide sous pression (I, II) pour les cylindres de freinage de roues (17 à 20) et avec au moins un dispositif de commande (36), qui commande les soupapes de commande en fonction de la pression de freinage désirée par le conducteur ainsi que du comportement en rotation des roues aux fins de protection anti-blocage et pour le dosage de la pression de freinage en fonction de la charge par essieu, installation de freinage caractérisée en ce que la pression de freinage de roue peut être modifiée sur au moins un essieu du véhicule pouvant être réglé en fonction de la charge (par exemple 12) en fonction de la mise en marche de la protection anti-blocage d'au moins une soupape de commande de pression (27 à 30) sur cet essieu du véhicule (12) et/ou d'autres essieux du véhicule (par exemple 11) par des facteurs de correction calculés par le dispositif de commande (36) dans le sens que la pression de freinage sur cet essieu du véhicule (12) soit réduite lors des freinages suivant la mise en marche de la protection anti-blocage d'au moins une soupape de commande (27 à 30) sur l'essieu du véhicule (12) pouvant être commandé en fonction de la charge, qu'elle soit par contre augmentée sur l'essieu du véhicule (12) pouvant être commandé en fonction de la charge lors des freinages suivant, une mise en marche de la protection anti-blocage d'au moins une soupape de commande (27 à 30) sur un autre essieu du véhicule (11) et en ce que la pression de freinage de roue est augmentée sur l'essieu du véhicule (par exemple 12) pouvant être commandé en fonction de la charge au moyen du dosage de la pression en fonction de la charge ,quand la montée dans le temps (gradient) de la pression de freinage souhaitée par le conducteur est plus grande qu'une valeur de seuil déterminée et qu'il subsiste une mise en marche de la protection anti-blocage d'au moins une soupape de commande (27 à 30) sur les essieux du véhicule (11, 12).

2. Installation de freinage selon la revendication 1, caractérisée en ce que la pression de freinage de roue peut être modifiée sur un essieu du véhicule (par exemple 12) pouvant être commandé en fonction de la charge en fonction de la valeur de la pression de freinage ($P_{k1}$) provoquant une tendance au blocage d'au moins un roue (par exemple 21) d'un essieu du véhicule (par exemple 12).

3. Installation de freinage selon la revendication 1, caractérisée en ce que la pression de freinage de roue peut être modifiée sur un essieu du véhicule pouvant être commandé en fonction de la charge (par exemple 12), en fonction de la durée ($T_a$, $T_b$) d'un cycle de fonctionnement de la protection anti-blocage sur au moins une roue d'un essieu du véhicule ainsi qu'en fonction de la valeur de la pression de freinage ($P_R$) provoquant une tendance au blocage de cette roue.

4. Installation selon la revendication 1, caractérisée en ce que la pression de freinage de roue peut être modifiée sur un essieu du véhicule (par exemple 12) pouvant être commandé en fonction de la charge, en fonction de l'augmentation dans le temps de la pression de freinage (p) et en fait est augmentée avec une rapide montée croissante de la pression.

5. Installation de freinage selon au moins l'une des revendications 1 à 4, caractérisée en ce que dans le cas de freinages consécutifs la pression maximale de freinage respectivement atteinte, aussi contrôlée en cas de besoin en ce qui concerne le blocage, est mise en mémoire dans le dispositif de commande (36), en ce qu'en outre une valeur de la pression de freinage correspondante aux charges d'essieu du véhicule est détectée à partir des valeurs mises en mémoire dans un appareil de calcul électronique des dispositifs de commande (36) et en ce que cette valeur peut être utilisée pour d'autres freinages comme valeur guide de la pression de freinage.

FIG. 1

FIG. 2

FIG. 3

FIG. 4

FIG.5a

FIG.5b

FIG. 6

FIG. 7

FIG.8

FIG.9

FIG.10